# EUROPEAN PATENT APPLICATION

(11) **EP 3 208 702 A1**
(43) Date of publication of application: **23.08.2017**
(21) Application number: 15794048.7
(22) Date of filing: 27.01.2015
(51) Int. Cl.: G06F 3/0481

(54) **METHOD FOR DISPLAYING APPLICATION VIA WIDGET, AND MOBILE TERMINAL**

(30) Priority: 14.10.2014 CN 201410543086
(71) Applicant: Huizhou TCL Mobile Communication Co., Ltd., Huizhou, Guangdong 516006 (CN)
(72) Inventor: QIAN, Wen, Huizhou Guangdong 516006 (CN); QIAO, Hongwei, Huizhou Guangdong 516006 (CN)
(74) Representative: ZHAOffice SPRL
(86) International application number: PCT/CN2015/071625
(87) International publication number: WO 2016/058293

(57) **Abstract**

A method and a mobile terminal for displaying an application with a widget are disclosed. The method includes: monitoring actively by the widget activation of a first application, and acquiring its activation information; monitor actively by the widget deactivation of the first application, and acquiring its deactivation information; acquiring by the widget the latest information of the application when the application is deactivated, and displaying the latest information. The mobile terminal includes a widget module, a supervision unit configured to monitor the activation or deactivation of a first application in the mobile terminal, an acquisition unit configured to acquire the activation or deactivation information generated and transmitted by the supervision module and acquire the latest information of the first application when the deactivation information is acquired, a display unit configured to display the latest information of the first application that is acquired by the acquisition unit. By the above means, the present disclosure can perceive the user's usage habits, and thus update the user-interested contents in the widget.

## Description

### FIELD OF THE DISCLOSURE

The present disclosure relates to the field of displaying a mobile application, and more particularly, to a method and a mobile terminal for displaying an application with a widget.

### BACKGROUND OF THE DISCLOURE

The widespread popularity of mobile terminals has made people's lives more convenient. Many applications that may be used on a day-to-day basis can be run on a mobile terminal, for example, utility applications including calendars, clocks, weather, and social networking applications including microblogs, Facebook, etc. These applications may be used frequently. Hence, users would expect to acquire the information of these applications more quickly and easily when using a mobile terminal.

Currently, the widgets can basically satisfy people's requirements. A widget is an application displayed on the desktop of a mobile terminal, and can display the relevant information on the desktop of the mobile terminal. Today's mobile terminals generally display the frequently-needed information such as, for example, calendars, clocks, etc., on the desktop via widgets. However, when the user does not wish to view the information of this application, he/she may need to delete the corresponding widget manually, where the manipulation is relatively complicated for the user. Furthermore, the mobile terminal may need to monitor the application during the process of widget's displaying the information of the application so as to enable the widget to display the latest information of this application. Namely, the monitor function of the mobile terminal would be exploited for the widget to display the application information, causing a low stability of the widget.

### SUMMARY OF THE DISCLOSURE

A primary technical problem to be solved by the present disclosure is to provide a method and a mobile terminal for displaying an application with a widget, which can receive the application information even when the application does not actively send the information, perceive the user's habits, update the user-interested contents in the widget and adjust the contents at any moment based on the usage of the user.

To solve the above technical problem, a technical solution adopted by the present disclosure is to provide a sonar ranging method, the method comprising the following steps:

monitoring actively by the widget the activation of a first application, and acquiring the activation information of the first application; monitoring actively by the widget the deactivation of the first application, and acquiring the deactivation information of the first application; acquiring by the widget the latest information of an accessory or add-on corresponding to the first application, and displaying the latest information of the accessory or add-on corresponding to the first application; acquiring by the widget regularly or irregularly the latest information of the accessory or add-on corresponding to the first application in the case the first application is no longer activated, and displaying the latest information.

The step of displaying by the widget the latest information of the accessory or add-on corresponding to the first application may comprise: displaying by the widget the latest usage information of the accessory or add-on corresponding to the first application, the output information generated by the accessory or add-on corresponding to the first application, or the information of the accessory or add-on itself corresponding to the first application. The method may further comprise, after the step of acquiring by the widget the latest information of the first application when the first application is deactivated: monitoring actively by the widget the activation of a second application, and acquiring the activation information of the second application; monitoring actively by the widget the deactivation of the second application, and acquiring the deactivation information of the second application; acquiring by the widget the latest information of the second application when the second application is deactivated and displaying the latest information of the second application, and meanwhile terminating the display of the latest information of the first application.

To solve the above technical problem, another technical solution adopted by the present disclosure is to provide a sonar ranging method, comprising the following steps:

monitoring actively by the widget the activation of a first application, and acquiring the activation information of the first application; monitoring actively by the widget the deactivation of the first application, and acquiring the deactivation information of the first application; acquiring by the widget the latest information of the first application when the first application is deactivated, and displaying the latest information.

The step of acquiring by the widget the latest information of the first application when the first application is deactivated and displaying the latest information of the first application may comprise: acquiring by the widget the latest information of the first application when the first application is deactivated, and displaying the latest information of the first application in the case the first application is no longer activated.

The method may further comprise, after the step of displaying by the widget the latest information of the first application in the case the first application is no longer activated: acquiring by the widget regularly or irregularly the latest information of the first application in the case the first application is no longer activated, and displaying the latest information.

The step of acquiring by the widget the latest information of the first application when the first application is deactivated and displaying the latest information of the first application may comprise: acquiring by the widget the latest information of an accessory or add-on corresponding to the first application when the first application is deactivated, and displaying the latest information of the accessory or add-on corresponding to the first application.

The step of displaying by the widget the latest information of the first application may comprise: displaying by the widget the latest usage information of the first application, the output information generated the first application, or the information of the first application itself The method may further comprise, after the step of acquiring by the widget the latest information of the first application when the first application is deactivated: monitoring actively by the widget the activation of a second application, and acquiring the activation information of the second application; monitoring actively by the widget the deactivation of the second application, and acquiring the deactivation information of the second application; acquiring by the widget the latest information of the second application when the second application is deactivated and displaying the latest information of the second application, and meanwhile terminating the display of the latest information of the first application.

To solve the above technical problem, yet another technical solution adopted by the present disclosure is to provide a mobile terminal for displaying an application with a widget, the mobile terminal comprising:

a first supervision unit, configured to run a widget and have the widget monitor actively the activation of a first application and acquire the activation information of the first application; a second supervision unit, configured to run the widget and have the widget monitor actively the deactivation of the first application and acquire the deactivation information of the first application; a display unit, configured to run the widget and have the widget acquire the latest information of the first application when the first application is deactivated, and to display the latest information of the first application.

The display unit may be further configured to run the widget and have it acquire the latest information of the first application when the first application is deactivated, and to display the latest information of the first application when the first application is no longer activated.

The display unit may be further configured to run the widget and have it acquire regularly or irregularly the latest information of the first application in the case the first application is no longer activated, and to display the latest information.

The mobile terminal may further comprise an external accessory or add-on corresponding to the first application. The display unit runs the widget application to have it acquire the latest information of the accessory or the add-on corresponding to the first application and display the latest information of the accessory or add-on corresponding to the first application.

The first supervision unit may be further configured to run the widget and have the widget monitor actively the activation of a second application and acquire the activation information of the second application. The second supervision unit may be further configured to run the widget and have the widget monitor actively the deactivation of the second application and acquire the deactivation information of the second application. The display unit may be further configured to run the widget and have the widget acquire the latest information of the second application when the second application is deactivated, and to display the latest information of the second application and meanwhile terminate displaying the latest information of the first application, wherein the latest information of the first application comprises the latest usage information, the output information generated by the application or the information of the application itself, the first and second applications are both any on application installed in the mobile terminal.

Beneficial effects of the present disclosure lie in: differing from the prior art, the widget according to the present disclosure can monitor the applications installed in the mobile terminal, and acquire the activation or deactivation information of the applications, and, when successively acquiring the activation information and the deactivation information and thus deeming the user to be interested in the information of the application, acquire the latest information of this application when the application is deactivated and display the latest information of the application. The widget according to the present disclosure can display the latest information on the display screen of the mobile terminal, and can acquire the usage information of the application even when the application does not send information actively, perceive the user's habits, and adjust the displayed information at any moment based on the usage of the user.

### BRIEF DESCRIPTION OF THE DRAWINGS

FIG. 1 is a flow chart illustrating a method for displaying an application with a widget according to a first embodiment of the present disclosure.
FIG. 2 is a flow chart illustrating a method for displaying an application with a widget according to a second embodiment of the present disclosure.
FIG. 3 is a flow chart illustrating a method for displaying an application with a widget according to a third embodiment of the present disclosure.
FIG. 4 is a block diagram illustrating a mobile terminal for displaying an application with a widget according to a fourth embodiment of the present disclosure.
FIG. 5 is a block diagram illustrating a mobile terminal for displaying an application with a widget according to a fifth embodiment of the present disclosure.
FIG. 6 is a flow chart illustrating the implementation steps of the mobile terminal for displaying an application with a widget according to the fifth embodiment of the present disclosure.

### DETAILED DESCRIPTION OF THE DISCLOSURE

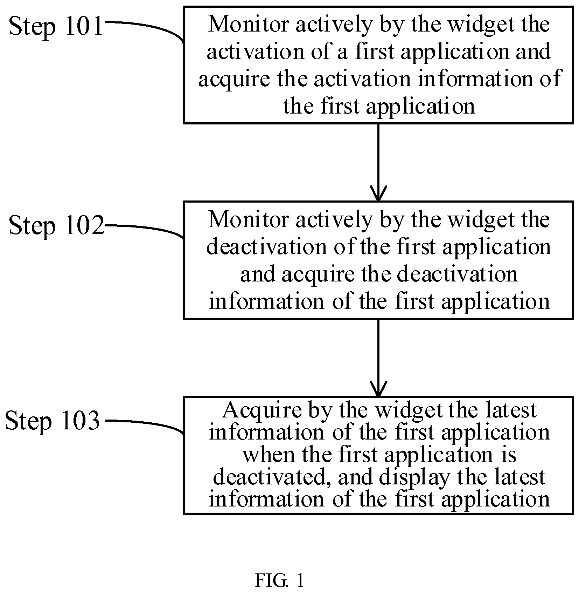

Referring now to FIG. 1, there is shown a flow chart illustrating a method for displaying an application with a widget according to a first embodiment of the present disclosure. The method for displaying an application with the widget according to the first embodiment comprises the following steps:
Step 101: monitoring actively by the widget the activation of a first application, and acquiring the activation information of the first application.

The first application may be any one application existing in the mobile terminal, for example, a weather forecasting application, a social networking application including microblogs, WeChat, Facebook, and an application installed on the mobile terminal for connecting an external device such as an application used to process the data of a sport wristband, or to display the data of medical apparatuses and instruments.

The active monitor function performed by the widget can also be implemented by other devices or programs such as, for example, monitor threads in the operating system of the mobile terminal, or monitor circuits in the mobile terminal, which are used to monitor the activation action or deactivation action of all applications installed in the mobile terminal. In this case, when the user activates one of the applications, the widget may acquire the activation information of this application.

Step 102: monitoring actively by the widget the deactivation of a first application, and acquiring the deactivation information of the first application.

The widget may have acquired the activation information of the first application in the step 101. If another application is activated before the first application is deactivated (i.e., the first application is suspended in the background), the widget can also acquire the activation information of the application that is activated later. Thus, the widget may perform multi-thread management for multiple applications. In addition, the widget can also be configured to acquire the activation and deactivation information of only a single application. In this case, the application, when suspended in the background, can also be considered to be deactivated.

In other embodiments, the active monitor function of the widget may be performed by other devices or programs. The other devices or programs may, when monitoring the deactivation of the first application, send deactivation information to the widget. Or the following manner can be adopted, namely, the other devices or programs first monitor the activation of the first application, and the widget acquires the activation information of the first application and then proceeds to actively monitor the deactivation of the first application.

Step 103: acquiring by the widget the latest information of the first application when the first application is deactivated, and displaying the latest information of the first application.

The latest information of the application may comprise the latest usage information of the application, the output information generated by the application, or the information of the application itself. The latest information may also comprise the measured data of an external device corresponding to the application, the device's own parameters, etc.

The widget may acquire the latest information of the first application concurrently when the first application is deactivated, and, when the interface of the mobile terminal is returned to the desktop, display the latest information of the first application on the desktop. The widget can also reside on the display interface of the mobile terminal in the form of a floating window. The latest information of the first application will be shown in the floating window when the first application is deactivated. When the widget interface is displayed, other major real-time information in the mobile terminal can also be displayed concurrently, which won't be interfered by the widget, for example, the number of text messages, missed calls and the like.

The widget can also be divided into multiple regions for displaying the latest information of multiple applications. The division of the multiple regions may be the default system settings, and can also be based on the habits of the user to configure freely the dimension and number of the regions.

The first embodiment is based on the fact of the user's having used the first application (i.e., the fact that the first application has experienced the actions of being activated and deactivated) to trigger the widget to acquire and display the latest information of the first application. In other embodiments, the mobile terminal can also monitor the user's usage of the applications for a period of time, and display the updates of the application having been activated for the most times in the widget, or display the updates of the application having the longest interval between the activation and deactivation in the widget.

The first embodiment, which differs from the prior art, uses a widget to monitor actively the activation of the first application and acquire the activation information of the first application, and proceed to monitor the deactivation of the first application and acquires its deactivation information, during which the widget identifies the user's habits. And when the first application is deactivated, the widget acquires the latest information of the first application and displays the latest information, i.e., displays the user-interested latest information of the application based on the acquired usage habits of the user.

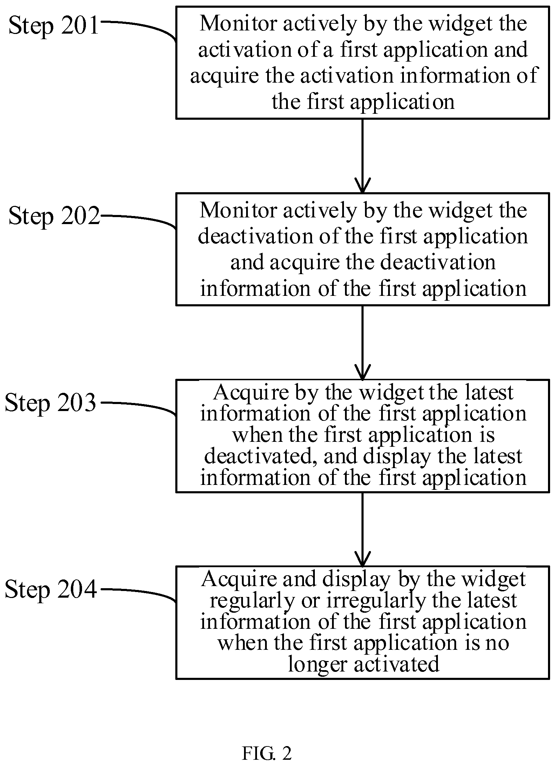

Referring now to FIG. 2, there is shown a flow chart illustrating a method for displaying an application with a widget according to a second embodiment of the present disclosure. The method for displaying an application with the widget according to the second embodiment comprises the following steps:
Step 201: monitoring actively by the widget the activation of a first application, and acquiring the activation information of the first application.
Step 202: monitoring actively by the widget the deactivation of the first application, and acquiring the deactivation information of the first application.
Step 203: acquiring by the widget the latest information of the first application when the first application is deactivated, and displaying the latest information of the first application.
Step 204: acquiring by the widget regularly or irregularly the latest information of the first application in the case the first application is no longer activated, and displaying the latest information.

The case that the first application is no longer activated comprises, but is not limited to, the following two circumstances. First, the mobile terminal deactivates the first application, and does not activate other applications. In this case, the widget may acquire and display regularly or irregularly the latest information of the first application. Second, the mobile terminal deactivates the first application, and, meanwhile, activates other applications. In this case, the widget may also acquire and display regularly or irregularly the latest information of the first application, and when the other applications activated concurrently are not deactivated, the latest information of the first application would be displayed on the desktop of the mobile terminal. If the first application is activated again, according to other embodiments, the widget may also acquire and display regularly or irregularly the latest information of the first application.

The regular acquisition discussed herein can be set up freely by the user, where the regular intervals may set up to be generally 1 or 2 hours in order to reduce power consumption, and may also set up to be 4 or 5 hours so as to meet the user's living habits. For example, the user may be accustomed to check the latest information of the application of interest at breakfast, lunch and dinner time, and the time intervals between breakfast, lunch and dinner are approximately between 4 or 5 hours, which thus will be set as the update time to satisfy the user's usage habits. Further, the user may also set the widget to update at fixed times of each day such as, for example, 9 a:m or 12 a:m. A reminder clock can also be added. In order to reduce the complexity of the user's operations, of course, a related functionality can also be configured in the widget so as to enable the widget to set automatically the update time based on time data of the user's checking the messages.

While irregular acquisition can be understood as real-time update or the user's manual update. When the latter, the user may need to click on a relevant region of the interface to enable the widget to be updated, so as to check the latest information. The relevant region can be a floating button or a refresh button in the interface of the widget.

The second embodiment, which differs from the prior art, uses the widget to monitor actively the activation of the first application and acquire the activation information of the first application, and proceed to monitor the deactivation of the first application and acquire its deactivation information. When the first application is deactivated, the widget may acquire the latest information of the first application and display the latest information, and, when the first application is no longer activated, acquire regularly or irregularly the latest information of the first application. Also differing from the first embodiment, the user may select the regular update or irregular update based on his/her own usage habits, and may also tailor the update intervals. The current embodiment can identify the usage habits of the user and thus display the latest information of the user-interested application, and can also be customized to display the latest information.

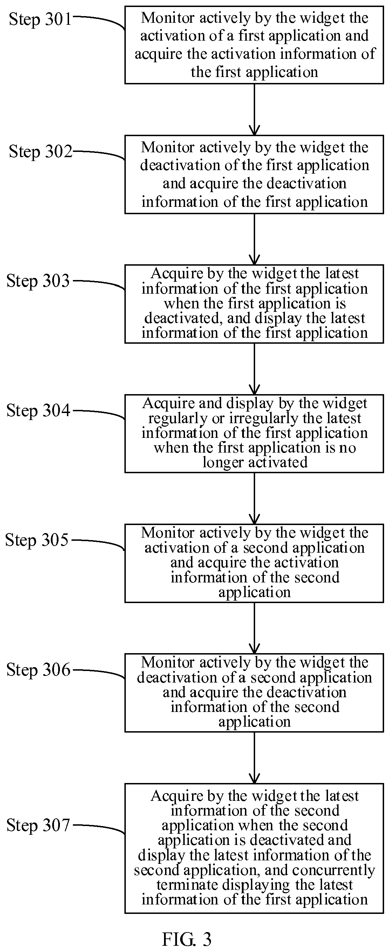

Referring now to FIG. 3, there is shown a flow chart illustrating a method for displaying an application with a widget according to a third embodiment of the present disclosure. The method for displaying the widget application according to the third embodiment comprises the following steps:
Step 301: monitoring actively by the widget the activation of a first application, and acquiring the activation information of the first application.
Step 302: monitoring actively by the widget the deactivation of the first application, and acquiring the deactivation information of the first application.
Step 303: acquiring by the widget the latest information of the first application when the first application is deactivated, and displaying the latest information of the first application.

The latest information of the first application may comprise the latest usage information, the output information generated by the first application, or the information of the first application itself.

The latest information of the first application may comprise not only the three types discussed above. When different types of information need to be displayed, they may be displayed in a same region concurrently, and can also displayed in multiple regions, respectively, where the regions can be customized by the user, and the size of the display interface of the widget can also be adjusted at any moment, or the information can be displayed based on a default mode of the mobile terminal itself.

In this step, when the first application is associated with an accessory or add-on, the widget may acquire the latest information of the accessory or add-on corresponding to the first application when the first application is deactivated, and display the latest information of the accessory or add-on corresponding to the first application. The deactivation herein comprises deactivating the accessory, i.e., disconnecting the connection between the accessory and the mobile terminal, and deactivating solely the first application running in the mobile terminal.

Step 304: acquiring by the widget regularly or irregularly the latest information of the first application in the case the first application is no longer activated, and displaying the latest information.

Step 305: monitoring actively by the widget the activation of a second application, and acquiring the activation information of the second application.

This step and subsequent steps are all corresponding actions performed by the widget when the widget acquires and displays the latest information of the first application and a second application is activated and deactivated. These actions are analogous to the actions in the first or second embodiment that are performed on the first application. Namely, the steps 305-307 are similar to steps 301-303. It can thus be easily concluded that, if a third application is activated and deactivated when the widget acquires and displays the latest information of the second application, the widget may in turn acquire and display the latest information of the third application. The third application may be an application different from the second application, and thus can also be the first application.

Step 306: monitoring actively by the widget the deactivation of a second application, and acquiring the deactivation information of the second application.

Step 307: acquiring by the widget the latest information of the second application when the second application is deactivated, and displaying the latest information of the second application and concurrently terminating displaying the latest information of the first application.

In this step, the case that the widget terminates displaying the latest information of the first application concurrently when acquiring and displaying the latest information of the second application is based on the premise that the widget can display the latest information of only one application at one time and thus adjust in real-time according to the usage of the user.

Further, the display interface of the widget can also be divided into multiple sub-windows for displaying multiple applications. Taking into account the comfort for the user's viewing, the size of the widget's display interface can be adjusted at any moment, and the number and size of the sub-windows can also be customized accordingly.

Differing from the prior art, the widget of the third embodiment may, after acquiring and displaying the latest information of the first application, proceed to monitor actively the activation of the second application and acquire the activation information of the second application, and then monitor the deactivation of the second application and acquire the deactivation information of the second application, and acquire and display the latest information of the second application when the second application is deactivated. The widget can not only display the application in which the user is interested, but also identify the user's usage in real-time and adjust the contents displayed at any moment accordingly.

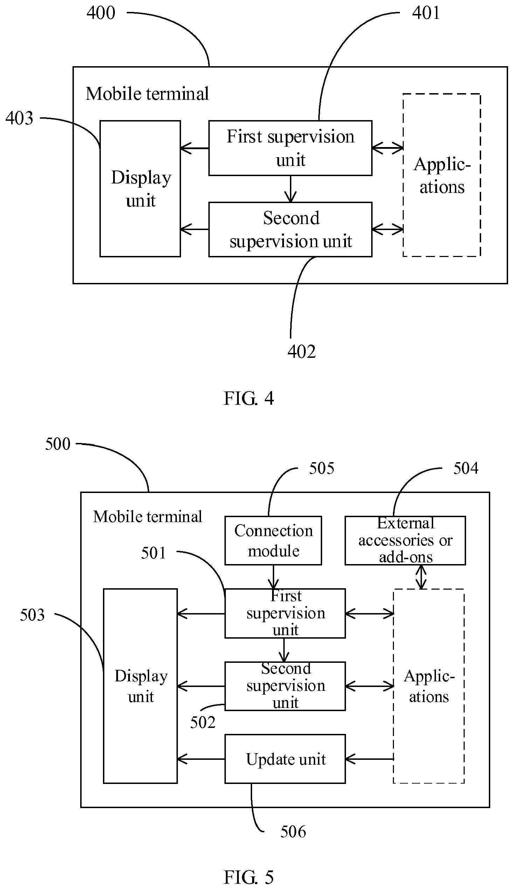

Referring now to FIG. 4, there is shown a block diagram illustrating a mobile terminal for displaying an application with a widget according to a fourth embodiment of the present disclosure. A mobile terminal 400 for displaying an application with a widget is provided in the fourth embodiment, comprising:
a first supervision unit 401, configured to run a widget to have it monitor actively the activation of a first application and acquire the activation information of the first application;
a second supervision unit 402, configured to run the widget and have it monitor actively the deactivation of the first application and acquire the deactivation information of the first application;
a display unit 403, configured to run the widget and have it acquire the latest information of the first application when the first application is deactivated, and to display the latest information of the first application.

The first supervision unit 401 is connected to the second supervision unit 402, which is in turn connected to the display unit 403. The first supervision unit 401 may run the widget and have it monitor actively the activation of the first application, and, when the widget acquires the activation information of the first application, trigger the second supervision unit 402 to run the widget and have it monitor actively the deactivation of the first application and acquire the deactivation information of the first application. When the first supervision unit 401 has acquired the activation information and the second supervision unit 402 has acquired the deactivation information of the same application, the display unit 403 may be triggered to run the widget to have it acquire the latest information of this application and display the latest information.

The current embodiment is a mobile terminal based on the method for displaying an application with a widget according to the first embodiment, and can implement the various possible methods as described in the first embodiment and thus won't be went into details herein.

Differing from the prior art, the current embodiment performs the process of the widget's displaying the applications on the mobile terminal, which can effectuate the whole process via the first supervision unit, the second supervision unit and the display unit. The respective units can all run the widget to implement the functionalities of active monitor, information acquisition and information display, thus further implementing the method as described in the first embodiment.

Referring now to FIG. 5, there is shown a block diagram illustrating a mobile terminal for displaying an application with a widget according to a fifth embodiment of the present disclosure. A mobile terminal 500 for displaying an application with a widget is provided in the fourth embodiment, the mobile terminal 500 comprising:
a first supervision unit 501, configured to run a widget and have it monitor actively the activation of a first or a second application and acquire the activation information of the first or the second application;
a second supervision unit 502, configured to run the widget and have it monitor actively the deactivation of the first or second application and acquire the deactivation information of the first or second application;
a display unit 503, configured to run the widget to have it acquire the latest information of the first application when the first application is deactivated and to display the latest information of the first application, and to further run the widget to have it acquire the latest information of the second application when the second application is deactivated and to display the latest information of the second application and concurrently terminate displaying the latest information of the first application;
an external accessory or add-on 504, comprising a sport wristband or a medical apparatus and instrument;
a connection unit 505, configured to monitor the networking condition of the mobile terminal 500, and, when the mobile terminal 500 is networked, activate the first supervision unit 501;
an update unit 506, configured to update the latest information of the first application, and transmit the latest information to the display unit 503.

The connection unit 505 is connected to the first supervision unit 501, which is connected to the second supervision unit 502. The display unit 503 is connected to the first supervision unit 501, the second supervision unit 502, and the update unit 506, respectively.

In this embodiment, the first application and the second application can either be any one application installed in the mobile terminal 500.

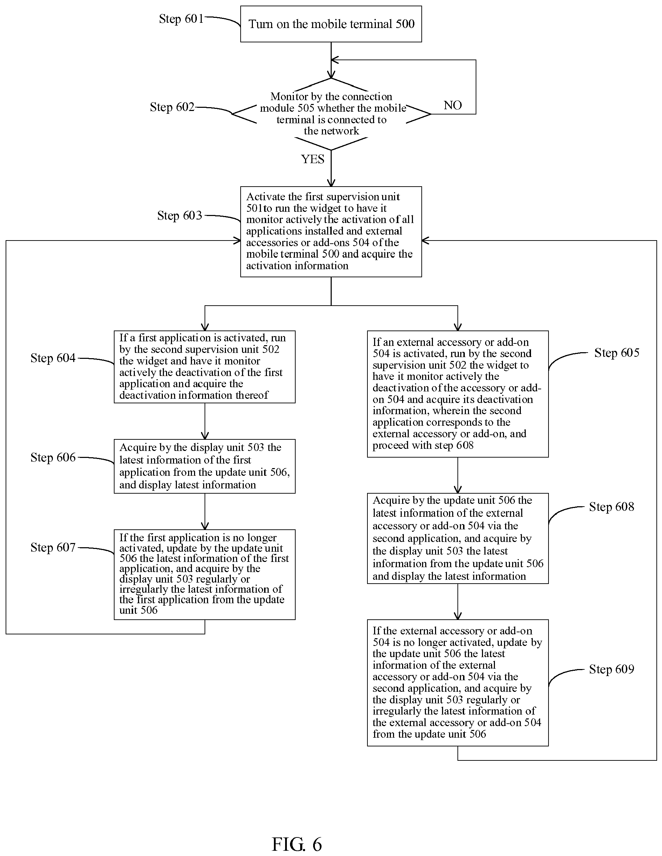

Referring now to FIG. 6, there is shown a flow chart illustrating the mobile terminal 5 for displaying an application with the widget according to the fifth embodiment of the present disclosure, with the specific implemention steps as below:
Step 601: turning on the mobile terminal 500.
Step 602: monitoring by the connection module 505 whether the mobile terminal 500 is connected to the network.
Step 603: if the mobile terminal 500 is networked, activating the first supervision unit 501, which runs the widget and have it monitor actively the activation of all applications on the mobile terminal 500 and external accessories or add-ons and acquire the activation information.
Step 604: if a first application is activated, running by the second supervision unit 502 the widget to have it monitor actively the deactivation of the first application and acquire the deactivation information, and proceeding with step 606 illustrated below.
Step 605: if the external accessory or add-on 504 is activated, running by the second supervision unit 502 the widget to have it monitor actively the external accessory or add-on 504 and acquire the deactivation information, where the second application corresponds to the external accessory or add-on 504, and proceeding with step 608 illustrated below.
Step 606: acquiring by the display unit 503 the latest information of the first application from the update unit 506, and displaying the latest information.
Step 607: returning to step 603, and, when the first application is no longer activated, updating by the update unit 506 the latest information of the first application, and acquiring by the display unit 503 regularly or irregularly the latest information of the first application from the update unit 506.

In the step 607 according to other embodiments, the update unit 506 may update regularly or irregularly the latest information of the first application, and transit the latest information to the display unit 503. Namely, the update unit 506 updates regularly or irregularly the latest information, while the display unit 503 receives the latest information in real time.

Step 608: acquiring by the update unit 506 the latest information of the external accessory or add-on 504 via the second application, acquiring by the display unit 503 the latest information from the update unit 506, and displaying the latest information.

Step 609: returning to the step 603, if the external accessory or add-on 504 is no longer turned on, updating by the update unit 506 the latest information of the external accessory or add-on via the second application, acquiring by the display unit 503 regularly or irregularly the latest information of the external accessory or add-on 504 from the update unit 506.

In the current embodiment, the first and second applications may either be any one application installed in the mobile terminal 500. Providing that the completion of step 607 or 609 and then back to step 603 is defined as one cycle, then the first and second applications can both remain the same or be different in each cycle. If the application in the current cycle is the same with that in the previous cycle, then the display unit may proceed to display the latest information of this application. If the application in the current cycle is different from that in the previous cycle, then the display unit may terminate the display of the application in the previous cycle, and in turn display the latest information of the application in the current cycle.

Differing from the prior art and the embodiments illustrated above, the current embodiment adds an additional connection module configured to monitor the networking condition of the mobile terminal, and activate the function of widget only when the mobile terminal is networked, so as not to do futile work when the mobile terminal is off the network that the widget cannot be updated. Further, when there is an accessory or an add-on, the current embodiment can also update the information of the accessory or add-on, and thus, when compared with the embodiments discussed above, have wider applications and be more suitable for the usage habits of today's users.

What is described above is merely embodiments of the present disclosure, thus shouldn't be construed to be limiting the patentable scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A method for displaying an application with a widget, comprising:
monitoring actively by the widget activation of a first application, and acquiring activation information of the first application;
monitoring actively by the widget deactivation of the first application, and acquiring deactivation information of the first application;
acquiring by the widget latest information of an accessory or add-on corresponding to the first application when the first application is deactivated, and displaying the latest information of the accessory or add-on corresponding to the first application; and
acquiring and displaying by the widget regularly or irregularly the latest information of the accessory or add-on corresponding to the first application when the first application is no longer activated.

2. The method according to claim 1, wherein the step of displaying by the widget the latest information of the accessory or add-on corresponding to the first application comprises:
displaying by the widget latest usage information of the accessory or add-on corresponding to the first application, output information generated by the accessory or add-on corresponding to the first application, or the information of the accessory or add-on itself corresponding to the first application; the method further comprising, after the step of acquiring by the widget the latest information of the first application when the first application is deactivated:
monitoring actively by the widget activation of a second application, and acquiring activation information of the second application;
monitoring actively by the widget deactivation of the second application, and acquiring deactivation information of the second application; and
acquiring by the widget the latest information of the second application when the second application is deactivated, and displaying the latest information of the second application and concurrently terminating displaying the latest information of the first application.

3. A method for displaying an application with a widget, comprising:
monitoring actively by the widget activation of a first application, and acquiring activation information of the first application;
monitoring actively by the widget deactivation of the first application, and acquiring deactivation information of the first application; and
acquiring by the widget latest information of the first application when the first application is deactivated, and displaying the latest information of the first application.

4. The method according to claim 3, wherein the step of acquiring by the widget the latest information of the first application when the first application is deactivated and displaying the latest information of the first application comprises:
acquiring by the widget the latest information of the first application when the first application is deactivated, and displaying the latest information of the first application when the first application is no longer activated.

5. The method according to claim 4, wherein the method further comprises, after the step of displaying by the widget the latest information of the first application when the first application is no longer activated:
acquiring by the widget regularly or irregularly the latest information of the first application when the first application is no longer activated, and displaying the latest information.

6. The method according to claim 4, wherein the step of acquiring by the widget the latest information of the first application when the first application is deactivated and displaying the latest information of the first application comprises:
acquiring by the widget the latest information of an accessory or add-on corresponding to the first application when the first application is deactivated, and displaying the latest information of the accessory or add-on corresponding to the first application.

7. The method according to claim 3, wherein the step of displaying by the widget the latest information of the first application comprises:
displaying by the widget latest usage information of the first application, output information generated by the first application, or the information of the first application itself;
the method further comprising, after the step of acquiring by the widget the latest information of the first application when the first application is deactivated:
monitoring actively by the widget activation of a second application, and acquiring activation information of the second application;
monitoring actively by the widget deactivation of the second application, and acquiring deactivation information of the second application; and
acquiring by the widget the latest information of the second application when the second application is deactivated, and displaying the latest information of the second application and concurrently terminating displaying the latest information of the first application.

8. The method according to claim 4, wherein the step of displaying by the widget the latest information of the first application comprises:
displaying by the widget latest usage information of the first application, output information generated by the first application, or the information of the first application itself;
the method further comprising, after the step of acquiring by the widget the latest information of the first application when the first application is deactivated:
monitoring actively by the widget activation of a second application, and acquiring activation information of the second application;
monitoring actively by the widget deactivation of the second application, and acquiring deactivation information of the second application; and
acquiring by the widget the latest information of the second application when the second application is deactivated, and displaying the latest information of the second application and concurrently terminating displaying the latest information of the first application.

9. The method according to claim 5, wherein the step of displaying by the widget the latest information of the first application comprises:
displaying by the widget latest usage information of the first application, output information generated by the first application, or the information of the first application itself;
the method further comprising, after the step of acquiring by the widget the latest information of the first application when the first application is deactivated:
monitoring actively by the widget activation of a second application, and acquiring activation information of the second application;
monitoring actively by the widget deactivation of the second application, and acquiring deactivation information of the second application; and
acquiring by the widget the latest information of the second application when the second application is deactivated, and displaying the latest information of the second application and concurrently terminating displaying the latest information of the first application.

10. The method according to claim 6, wherein the step of displaying by the widget the latest information of the first application comprises:
displaying by the widget latest usage information of the first application, output information generated by the first application, or the information of the first application itself;
the method further comprising, after the step of acquiring by the widget the latest information of the first application when the first application is deactivated:
monitoring actively by the widget activation of a second application, and acquiring activation information of the second application;
monitoring actively by the widget deactivation of the second application, and acquiring deactivation information of the second application; and
acquiring by the widget the latest information of the second application when the second application is deactivated, and displaying the latest information of the second application and concurrently terminating displaying the latest information of the first application.

11. A mobile terminal for displaying an application with a widget, comprising:
a first supervision unit, configured to run a widget to have it monitor actively activation of a first application and acquire activation information of the first application;
a second supervision unit, configured to run the widget to have it monitor actively deactivation of the first application and acquire deactivation information of the first application; and
a display unit, configured to run the widget and to have it acquire latest information of the first application when the first application is deactivated, and to display the latest information of the first application.

12. The mobile terminal according to claim 11, wherein the display unit is further configured to run the widget to have it acquire the latest information of the first application when the first application is deactivated, and to display the latest information of the first application when the first application is no longer activated.

13. The mobile terminal according to claim 12, wherein the display unit is further configured to run the widget to have it acquire regularly or irregularly the latest information of the first application when the first application is no longer activated, and to display the latest information.

14. The mobile terminal according to claim 11, wherein the mobile terminal further comprises an external accessory or add-on corresponding to the first application; the display unit runs the widget to have it acquire the latest information of the accessory or add-on corresponding to the first application when the first application is deactivated, and displays the latest information of the accessory or add-on corresponding to the first application.

15. The mobile terminal according to claim 11, wherein
the first supervision unit is further configured to run the widget to have it monitor actively activation of a second application and acquire activation information of the second application;
the second supervision unit is further configured to run the widget to have it monitor actively deactivation of the second application and acquire deactivation information of the second application; and
the display unit is further configured to run the widget to have it acquire the latest information of the second application when the second application is deactivated, and to display the latest information of the second application and concurrently terminating displaying the latest information of the first application;
wherein the latest information of the first application comprises latest usage information, output information generated by the application, or information of the application itself, and the first and second applications are either any one application installed in the mobile terminal.

16. The mobile terminal according to claim 12, wherein
the first supervision unit is further configured to run the widget to have it monitor actively activation of a second application and acquire activation information of the second application;
the second supervision unit is further configured to run the widget to have it monitor actively deactivation of the second application and acquire deactivation information of the second application; and
the display unit is further configured to run the widget to have it acquire the latest information of the second application when the second application is deactivated, and to display the latest information of the second application and concurrently terminate displaying the latest information of the first application;
wherein the latest information of the first application comprises latest usage information, output information generated by the application, or information of the application itself, and the first and second applications are either any one application installed in the mobile terminal.

17. The mobile terminal according to claim 13, wherein
the first supervision unit is further configured to run the widget to have it monitor actively activation of a second application and acquire activation information of the second application;
the second supervision unit is further configured to run the widget to have it monitor actively deactivation of the second application and acquire deactivation information of the second application; and
the display unit is further configured to run the widget to have it acquire the latest information of the second application when the second application is deactivated, and to display the latest information of the second application and concurrently terminate displaying the latest information of the first application;
wherein the latest information of the first application comprises latest usage information, output information generated by the application, or information of the application itself, and the first and second applications are either any one application installed in the mobile terminal.

18. The mobile terminal according to claim 14, wherein
the first supervision unit is further configured to run the widget to have it monitor actively activation of a second application and acquire activation information of the second application;
the second supervision unit is further configured to run the widget and have it monitor actively deactivation of the second application and acquire deactivation information of the second application; and
the display unit is further configured to run the widget to have it acquire the latest information of the second application when the second application is deactivated,
and to display the latest information of the second application and concurrently terminate displaying the latest information of the first application;
wherein the latest information of the first application comprises latest usage information, output information generated by the application, or information of the application itself, and the first and second applications are either any one application installed in the mobile terminal.
